# DEMANDE DE BREVET EUROPEEN

(11) **EP 1 132 184 A1**
(43) Date de publication de la demande: **12.09.2001**
(21) Numéro de dépôt: 01400633.2
(22) Date de dépôt: 09.03.2001
(51) Int. Cl.: B26D 7/26, B23D 35/00

(54) **Cassette de découpage rotatif de type récupérable pour machines de transformation des papiers et cartons**

(30) Priorité: 10.03.2000 FR 0003123
(71) Demandeur: Société d'Etude de Machines pour les Arts Graphiques, 45160 Olivet (FR)
(72) Inventeur: Chiloff, Serge, 45160 Olivet (FR)
(74) Mandataire: Coester, Jacques Charles

(57) **Abrégé**

La cassette comprend un cylindre de coupe supérieur (12) et un cylindre de coupe inférieur (13) et comporte, d'une part, des pièces de montage (1-6) des cylindres de coupe (12, 13) qui sont des pièces facilement récupérables utilisables quel que soit le format de découpage et, d'autre part, des pièces de calage (7-11) des cylindres de coupe qui sont des pièces spécifiques au format du découpage, les pièces récupérables et les pièces spécifiques précitées étant assemblées au moyen de quatre tiges (5) d'une longueur constante quel que soit le format.

Constitution d'un ensemble rigide de dimensions extérieures constantes pouvant être introduit en une seule opération dans une coulisse verticale d'un appareil de découpage rotatif.

## Description

La présente invention concerne une cassette de découpage rotatif pour machine de transformation de papier et carton limitant les changements de format au remplacement des seules pièces dont la dimension doit varier en fonction des jeux de cylindre de découpage.

On sait que le moyen le plus ancien pour mettre en oeuvre le découpage rotatif dans les machines de transformation de papier et carton consiste à monter en usine les deux cylindres de découpage dans un cadre spécialement réalisé pour le format considéré. Ce cadre, avec ces deux cylindres de découpage, ces engrenages de liaison et son engrenage de commande constituent l'outillage de découpage proprement dit. Il est obligatoirement lié au format et à la forme de la découpe à effectuer. Un tel ensemble est lourd et onéreux et limite l'utilisation du découpage rotatif à des travaux fixes à séries très longues, telle que la découpe des boîtes de cigarettes, par exemple.

Une amélioration au découpage rotatif a été apportée avec l'apparition des cassettes constituant des ensembles plus légers, plus maniables et moins chers que les cadres montés selon la technique antérieure, mais qui restent cependant toujours liés au format et à la forme de la découpe.

Ainsi, le brevet français 89 04153 publié sous le N° 2 645 790 décrit un appareil de découpage rotatif comportant une cassette avec deux blocs reliés par des accouplements élastiques qui soulèvent le bloc supérieur par rapport au bloc inférieur avec une course limitée.

Le brevet français 91 15587 publié sous le N° 2 684 913 décrit également un appareil de découpage rotatif et celui-ci comporte un système de contre-pression réglable sur les blocs coulissants des cassettes. Cette contre-pression, en agissant sur les fusées des cylindres, donne une contre-pression sur les cylindres qui vient en diminution de la flèche due à la pression de coupe. Ce système, dit "antidéflexion" améliore les performances des découpages rotatifs. Enfin, le brevet français 93 01520 publié sous le N° 2 701 419 décrit un appareil de découpage rotatif et celui-ci apporte une amélioration au système d'antidéflexion mentionné précédemment au moyen d'un mécanisme élastique qui absorbe les variations dimensionnelles des cylindres de coupe consécutives à l'échauffement. Ce système est dit "à compensation d'échauffement".

Les cassettes de découpage moderne dérivent des trois brevets ci-dessus. Ces cassettes sont toutefois liées au format car la dimension verticale des blocs dépend du développement des cylindres de coupe. De plus, il est impossible d'effectuer par des moyens ordinaires une récupération de la cassette pour un autre jeu de cylindres de même développement. L'intervention d'un mécanicien hautement qualifié est en effet nécessaire pour d'une part démonter et remonter des roulements de fusée en ajustant correctement leurs précontraintes, d'autre part réajuster la réaction d'antidéflexion en fonction de la pression de coupe et de la position des chemins de roulement et enfin retoucher le réglage d'antidéflexion en cours de roulage en prenant soin à ce que la contre-pression soit limitée, afin que les couteaux ne touchent pas l'enclume, sous peine de détérioration de ces derniers.

De ce fait, les cassettes actuelles sont dans la pratique, tout comme les cadres classiques mentionnés plus haut, associées à un jeu donné de cylindre de coupe et constituent avec ces derniers des outillages de découpage complet. Ainsi, et bien que d'un coût moins élevé que les cadres classiques, l'utilisation de telles cassettes reste encore limité à des séries importantes.

Or, la tendance moderne va vers la diversité des découpes à effectuer et, par conséquent, à une réduction de l'importance des séries.

L'invention concerne ainsi un système de cassettes récupérables utilisables pour des jeux de cylindres de tout développement pratique et limitant les changements de format au remplacement des seules pièces dont la dimension doit varier. Le montage et le démontage sont effectués par les utilisateurs eux-mêmes, sans l'intervention d'un mécanicien hautement qualifié, contrairement aux cassettes connues. L'antidéflexion et la compensation d'échauffement sont prédéterminés par construction et obtenus automatiquement lors du montage.

Conformément à l'invention, la cassette de découpage rotatif comporte un cylindre de coupe supérieure et un cylindre de coupe inférieure pour le découpage d'une bande de carton ou de papier, est caractérisée en ce qu'elle comporte, d'une part, des pièces de montage des cylindres de coupe qui sont des pièces facilement récupérables et utilisables quel que soit le format de découpage et, des pièces de calage des cylindres de coupe qui sont des pièces spécifiques au format de découpage, les pièces facilement récupérables et les pièces spécifiques étant assemblées au moyen de quatre tiges d'une longueur constante quel que soit le format de façon à constituer un ensemble rigide de dimension extérieure constante pouvant être introduit en une seule opération dans une coulisse verticale d'un appareil de découpage.

L'invention sera mieux comprise et d'autres buts, caractéristiques, détails et avantages de celle-ci apparaîtront plus clairement de la description explicative qui va suivre en référence aux dessins schématiques annexés donnés uniquement à titre d'exemples illustrant un mode de réalisation de l'invention et sur lesquels :
la figure 1 est une vue de face de la cassette de découpage rotatif selon l'invention ;
la figure 2 est une vue de côté de la cassette de découpage rotatif de la figure 1 sans les éléments d'entraînement des cylindres de coupe ;
la figure 3 est une vue de dessus de la cassette de la figure 2 ;
la figure 4 représente un banc de montage de la cassette des figures précédentes.

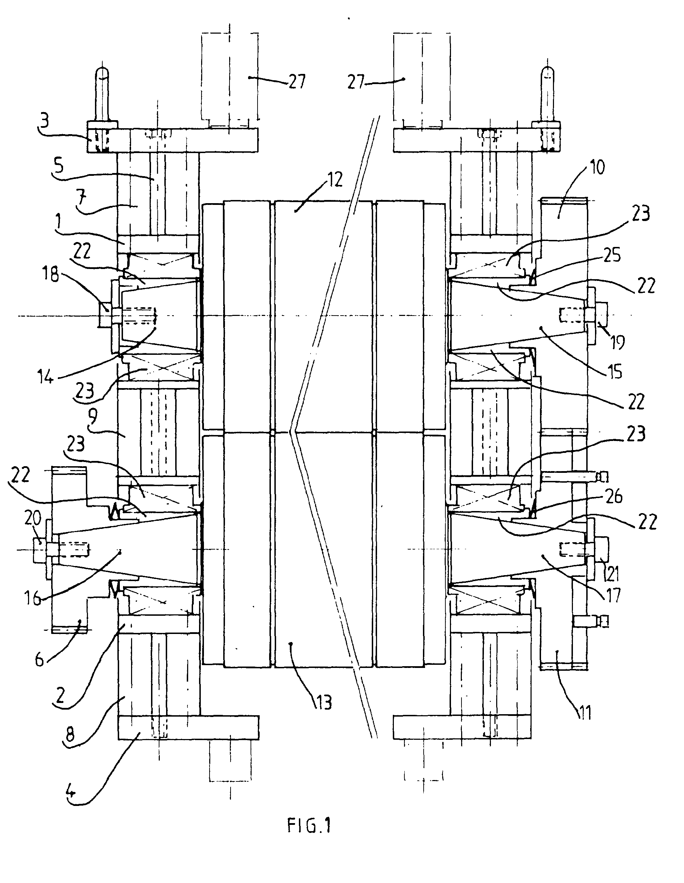

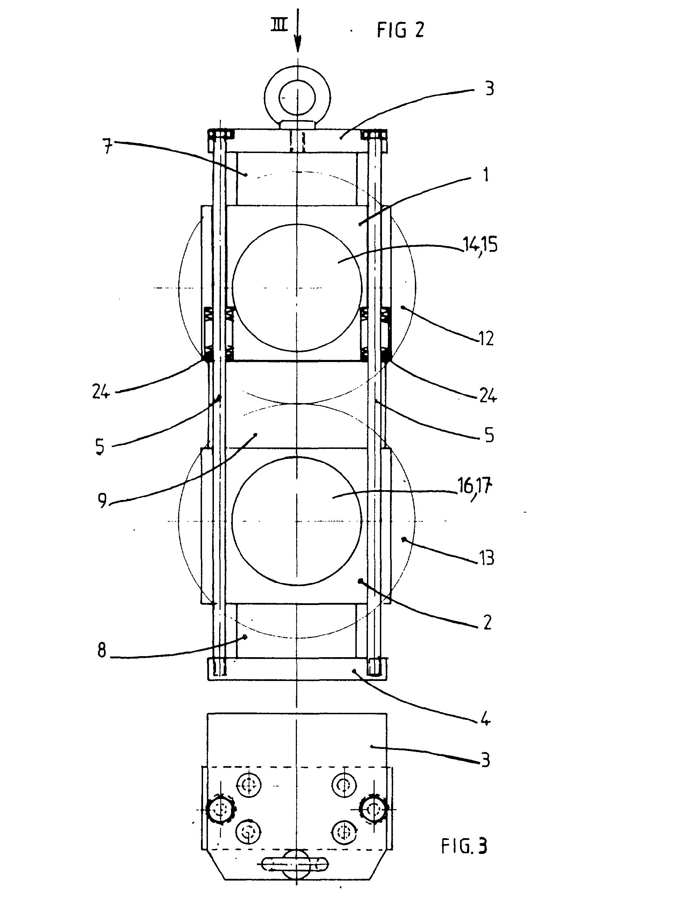

Comme on le voit notamment aux figures 1 et 2, la cassette de découpage rotatif selon l'invention est composée, d'une part, des pièces de montage suivantes des cylindres de coupe supérieur 12 et inférieur 13, ces pièces étant récupérables et dites "tout format", c'est-à-dire indépendantes du développement des cylindres de coupe :
- lobe coulissant supérieur 1
- lobe coulissant inférieur 2
- bride de serrage supérieure 3
- bride de serrage inférieure 4
- tiges 5 d'assemblage de limitation de la course de soulèvement des blocs supérieurs 1 par rapport aux blocs inférieurs 2
- engrenage de commande 6
et, d'autre part, de pièces de calage des cylindres de coupe supérieur 12 et inférieur 13 qui sont les pièces suivantes liées aux formats des cylindres de coupe :
- cales supérieures 7
- cales inférieures 8
- cales intermédiaires 9
- engrenage singulier de liaison supérieure 10
- engrenage singulier de liaison inférieure 11 à rattrapage de jeu.

Les cales supérieure 7 et inférieure 8 ont une dimension verticale calculée pour assurer la position correcte des cylindres de coupe 12 et 13 de sorte que l'ensemble ci-dessus des pièces récupérables et des pièces liées au format sont assemblées au moyen des quatre tiges 5 d'une longueur constante quel que soit le format de façon à constituer un ensemble rigide de dimension extérieure constante pouvant être introduit en une seule opération dans une coulisse verticale d'un appareil de découpage rotatif.

Les cylindres de coupe supérieur 12 et inférieur 13 comportent des fusées coniques 14, 15, 16 et 17, sur lesquelles sont fixés les cylindres de coupe par serrage des vis 18, 19, 20 et 21. La conicité des fusées coniques 14, 15, 16 et 17 est déterminée pour assurer un entraînement suffisant des cylindres de coupe 12 et 13, sans clavette ni tenon, après serrage des vis 18, 19, 20 et 21, tout en rendant facile le démontage de ces cylindres de coupe lorsque ces vis sont desserrées. Cette conicité peut par exemple, et sans que cela soit limitatif, être celle du cône standard des machines-outils de 7/24ème.

Les blocs coulissants supérieur 1 et inférieur 2 possèdent chacun un moyeu intérieur conique 22 dont la conicité s'adapte parfaitement à la conicité des fusées 14, 15, 16 et 17. Le moyeu 22 est monté avec des roulements précontraints 23 en usine dans des alésages des blocs et reste attenant à son bloc lors du démontage des cylindres de coupe 12, 13.

Les blocs coulissants supérieurs 1 sont, en ce qui concerne les éléments ci-dessus, semblables aux blocs coulissants inférieurs 2. Les blocs coulissants supérieur 1 possèdent cependant en outre des logements pour accueillir des rondelles élastiques 24 (figure 2) dont la compression par les tiges d'assemblage 5 assure à la fois la réaction verticale d'antidéflexion et la compensation d'échauffement, ce qui rend inutile les dispositions relativement complexes selon les brevets français mentionnés précédemment. La course des rondelles 24 est ainsi limitée par les tiges d'assemblage 5 dont la longueur a été déterminée de façon à ce que les cylindres de coupe 12, 13 soient écartés en position de repos d'une quantité juste suffisante pour passer une bande de carton ou de papier sans les découper.

Bien que les logements ci-dessus pour les rondelles élastiques 24 aient été prévues dans les blocs coulissants supérieurs 1, ceux-ci pourraient être cependant prévus dans les blocs coulissants inférieurs 2.

Des rondelles élastiques 25 et 26 bien visibles à la figure 1 sont prévues entre le moyeu intérieur conique 22 et les engrenages de commande 6 et de liaison 10, 11 afin de permettre une extraction automatique de ces engrenages lorsque les vis 18, 19, 20 et 21 sont desserrées, par décompression des rondelles 25, 26 lors du déserrage, ce qui permet de démonter les engrenages 6 et 10, 11.

À cet effet, les engrenages de liaison 10, 11 des cylindres de découpage 12, 13 et l'engrenage de commande 6 comportent des cônes intérieurs d'une conicité s'adaptant parfaitement aux fusées 14, 15, 16, 17 des cylindres avec compression des rondelles élastiques 25, 26.

Des vérins 27 sont prévus sur les brides de serrage supérieur 3 et inférieur 4 pour mettre en pression des cylindres de coupe 12, 13 et les cales intermédiaires 9 ont une dimension verticale calculée de façon, lorsque les cylindres de coupe 12, 13 sont en pression au moyen des vérins 27; à comprimer les rondelles élastiques 24 à une valeur telle que la réaction de celle-ci correspond à la réaction d'antidéflexion déterminée par le calcul (par un effort de contre-pression).

La compensation d'échauffement est obtenue par une variation de la compression des rondelles élastiques 24 consécutive à la dilatation des cylindres de coupe 12 et 13 en fonction de l'échauffement. Cette variation, compte tenu de la longueur suffisante de la dimension de l'empilage des rondelles 24, est négligeable par rapport à la compression initiale, ce qui maintient une réaction d'antidéflexion pratiquement constante quelle que soit la température des cylindres de coupe, de sorte que les dilatation dues à l'élévation de la température au cours du fonctionnement ont un effet négligeable sur l'effort d'antidéflexion.

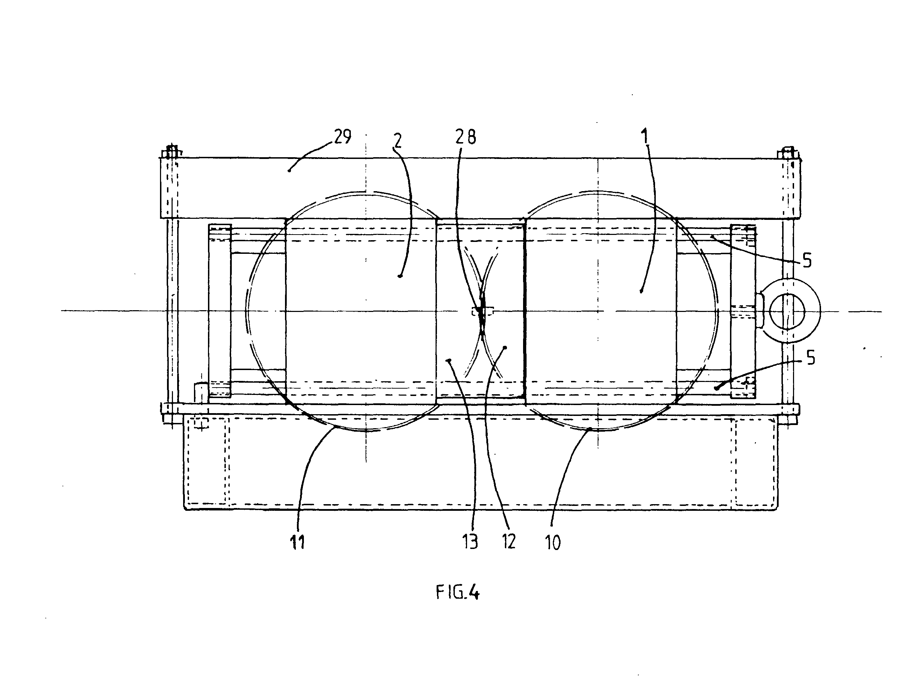

La figure 4 représente un banc de montage de la cassette des figures précédentes permettant à l'utilisation, grâce à un pion d'indexage et de centrage 28, d'assurer un parfait repérage entre les cylindres de coupe 12 et 13. Le pion de centrage 28 entrant dans des logements obtenus par usinage au moment de la réalisation des cylindres.

Les brides 29, tout en permettant le coulissement des blocs coulissants supérieur 1 et inférieur 2, et assurent une position horizontale parfaite de la cassette lors de son assemblage. Le serrage des engrenages de liaison 10 et 11 est effectué alors que les deux cylindres sont mis en pression au moyen des tiges 5, le pion de centrage 28 permettant ainsi d'assurer un parfait repérage entre les deux cylindres de coupe 12, 13 lors du serrage des engrenages de liaison 10, 11 sur les fusées 14, 15, 16, 17.

Le pion de centrage 28 est extrait après désserrage des tiges 5, lesquelles sont ensuite resserrées afin de limiter la course d'écartement des blocs 1 et 2 à la valeur prédéterminée lors de l'utilisation de la cassette.

L'invention n'est pas limitée au mode de réalisation représenté et décrit en détail car diverses modifications peuvent y être apportées sans sortir de son cadre tel que défini par les revendications ci-après.

## Revendications

1. Cassette de découpage rotatif comprenant un cylindre de coupe supérieur (12) et un cylindre de coupe inférieur (13) pour le découpage d'une bande de carton ou de papier, **caractérisée en ce qu**'elle comporte, d'une part, des pièces de montage des cylindres de coupe (12, 13) qui sont des pièces facilement récupérables utilisables quel que soit le format de découpage et, d'autre part, des pièces de calage des cylindres de coupe qui sont des pièces spécifiques au format du découpage, les pièces récupérables et les pièces spécifiques précitées étant assemblées au moyen de quatre tiges (5) d'une longueur constante quel que soit le format de façon à constituer un ensemble rigide de dimension extérieure constantes pouvant être introduit en une seule opération dans une coulisse verticale d'un appareil de découpage rotatif.

2. Cassette de découpage rotatif selon la revendication 1, **caractérisée en ce que** les pièces récupérables sont prises parmi les blocs coulissants supérieurs (1), les blocs coulissants inférieurs (2), les brides de serrage supérieures (3), les brides de serrage inférieures (4), les tiges (5) d'assemblage et de limitation de la course de soulèvement des blocs supérieurs (1) par rapport au bloc inférieur (2), et l'engrenage de commande (6), tandis que les pièces spécifiques au format de découpage sont prises parmi les cales supérieures (7), les cales inférieures (8), les cales intermédiaires (9), l'engrenage de liaison supérieure (10), et l'engrenage de liaison inférieure (11) à rattrapage de jeu.

3. Cassette de découpage rotatif selon l'une des revendications 1 ou 2, **caractérisée en ce que** deux des blocs coulissants supérieurs (1) et inférieurs (2), par exemple les blocs coulissants supérieurs (1), présentent des logements pour recevoir des rondelles élastiques (24) comprimées par les tiges d'assemblage (5) de l'ensemble et dont la longueur a été déterminée de façon à ce que les cylindres soient écartés en position de repos d'une quantité juste suffisante pour passer une bande de carton ou de papier sans les découper.

4. Cassette de découpage rotatif selon l'une des revendications 1 à 3, **caractérisée en ce que** les blocs coulissants (1, 2) comportent des moyeux à cône intérieur (22) d'une conicité suffisante pour assurer un bon serrage d'entraînement sans l'utilisation de clavettes ni de tenons, tout en permettant un démontage sans effort, sans moyens mécaniques extérieurs, et qui sont montés avec des roulements précontraints (23) dans les alésages des blocs.

5. Cassette de découpage rotatif selon l'une des revendications 1 à 4, **caractérisée en ce que** les cylindres de coupe supérieur (12) et inférieur (13) comportent des fusées coniques (14, 15, 16, 17) d'une conicité s'adaptant parfaitement au cône inférieur des blocs coulissants correspondants.

6. Cassette de découpage rotatif selon l'une des revendications 1 à 5, **caractérisée en ce que** les engrenages de liaison (10, 11) des cylindres de découpage (12, 13) et l'engrenage de commande (6) comportent des cônes intérieurs d'une conicité s'adaptant parfaitement aux fusées (14, 15, 16, 17) des cylindres de coupe, avec compression de rondelles élastiques (25, 26), la décompression de ces rondelles lors du desserrage permettant un démontage automatique de ces engrenages.

7. Cassette de découpage rotatif selon l'une des revendications 1 à 6, **caractérisée en ce que** l'empilage des rondelles élastiques (24) intérieures aux blocs coulissants et des cales intermédiaires (9) est tel qu'il donne, en position de pression de découpage, un effort de contre-pression calculé pour les besoins de l'antidéflexion et en ce que l'empilage des rondelles élastiques est suffisamment long pour que les dilatations dues à l'élévation de température au cours du fonctionnement aient un effet négligeable sur l'effort d'antidéflexion.

8. Cassette de découpage rotatif selon l'une des revendications 1 à 7, **caractérisée en ce que** les deux cylindres de coupe (12, 13) présentent deux logements parfaitement repérés par rapport à la forme de découpe pour recevoir, lors du montage de l'ensemble, un pion d'indexage (28) permettant d'assurer un parfait repérage entre les deux cylindres de coupe (12, 13) lors du serrage des engrenages de liaison (10, 11) sur les fusées (14, 15, 16, 17).
